# EUROPÄISCHE PATENTSCHRIFT

(11) **EP 1 390 904 B1**
(45) Veröffentlichungstag und Bekanntmachung des Hinweises auf die Patenterteilung: **15.09.2004**
(21) Anmeldenummer: 02724111.6
(22) Anmeldetag: 15.03.2002
(51) Int. Cl.: G06K 9/00, G06F 3/023

(54) **MOBILES KOMMUNIKATIONSENDGERÄT**
MOBILE COMMUNICATION TERMINAL
TERMINAL DE COMMUNICATION MOBILE

(30) Priorität: 24.04.2001 DE 10120067
(43) Veröffentlichungstag der Anmeldung: 25.02.2004
(73) Patentinhaber: SIEMENS AKTIENGESELLSCHAFT, 80333 München (DE)
(72) Erfinder: JERBI, Belhassen, 85551 Kirchheim (DE); LAUMEN, Josef, 31141 Hildesheim (DE); SCHMIDT, Andreas, 38114 Braunschweig (DE); TRAUBERG, Markus, 38159 Vechelde (DE); VAN NIEKERK, Sabine, 38228 Salzgitter (DE)
(86) Internationale Anmeldenummer: PCT/DE2002/000940
(87) Internationale Veröffentlichungsnummer: WO 2002/086800

(56) Entgegenhaltungen:
- EP-A- 0 330 767
- EP-A- 0 736 836
- EP-A- 0 932 117
- WO-A-99/28701
- US-A- 5 828 773

## Beschreibung

Die Erfindung betrifft ein mobiles Endkommunikationsgerät. Solche Geräte weisen üblicherweise eine Bedienfläche auf, auf der ein Display und eine Tastatur angeordnet sind. Die sehr umfangreichen Bedienfunktionen sind in meist umfangreichen Menüstrukturen organisiert. Die Menüstruktur nimmt nun keine Rücksicht auf die Häufigkeit der Benutzung einer Funktion. D.h. häufig genutzte Bedienfunktionen müssen genauso umständlich aufgerufen werden wie weniger häufig benutzte. Kommunikationsendgeräte sind in aller Regel einem bestimmten Benutzer zugeordnet und weisen dementsprechend eine Login-Funktion auf, mit der sich der autorisierte Benutzer mit Hilfe einer PIN anmeldet. Eine solche Anmeldung ist aber in aller Regel nicht oft erforderlich, so dass die Gefahr besteht, dass die PIN vergessen wird.

Das Dokument WO 99 28701 A offenbart ein mobiles Kommunikationsendgerät mit einer Bedienfläche, auf der ein biometrischer Sensor zur Erkennung eines Fingerabdrucks angeordnet ist. Ferner offenbart das Dokument EP-A-0 736 836, die Orientierung eines des zu verifizierenden Fingerabdrucks zu bestimmen, um die Erkennungsqualität zu verbessern. Das Dokument US-A-5 828 773 offenbart eine Vorrichtung mit einem Fingerabdrucksensor, wobei die Vorrichtung dafür ausgelegt ist, die aktuelle Position des Fingerabdrucks auf dem Fingerabdrucksensor relativ zu einer gewünschten Position zu bestimmen.

Aufgabe der Erfindung ist es, ein Kommunikationsendgerät vorzuschlagen, dessen Bedienung vereinfacht ist.

Diese Aufgabe wird gemäß Anspruch 1 gelöst. Dabei ist auf dem Bedienfeld eines mobilen Kommunikationsgeräts ein biometrischer Sensor zur Erkennung eines Fingerabdruckes vorhanden. Der Sensor, der in platzsparender Weise auch in das Display integriert sein kann, tastet die Linien einer Fingerspitze mit hoher Auflösung ab und erkennt beispielsweise die einem bestimmten Finger einer autorisierten Person zugeordnete charakteristische Fingerabdrucksstruktur durch Vergleich mit einem im Gerät hinterlegten Muster. Zur Anmeldung muss der Benutzer somit keine PIN mehr eingeben, sondern einfach einen bestimmten Finger auf die Sensorfläche auflegen.

Bei einer bevorzugten Ausgestaltung weist der Sensor eine Flächenausdehnung auf, die ein Auflegen eines Fingers an unterschiedlichen Positionen erlaubt. Der Sensor ist dabei so ausgebildet, dass er die unterschiedlichen Positionen erkennt. Zur Autorisierung kann dann neben dem Fingerabdruck selbst auch noch dessen Lage oder Ausrichtung herangezogen werden. Der Sensor ist schließlich noch so ausgelegt, dass er den Zeitabstand zwischen aufeinanderfolgenden Fingerabtastungen erkennt. Damit steht eine weitere Kombinationsmöglichkeit nicht nur im Hinblick auf eine Autorisierungsprüfung zur Verfügung. Der Sensor kann nämlich gleichzeitig als Eingabeeinrichtung dienen. Ein Fingerabdruck, eine Position, eine Ausrichtung oder ein Zeitabstand können dann in beliebiger, vorzugsweise vom Benutzer zu definierender Kombination zur Bedienung des Geräts benutzt werden. D.h. der Aufruf eines bestimmten Menüs, das Einstellen einer Gerätefunktion o. dgl. können über den Sensor erfolgen.

Die Erfindung wird nun anhand eines in den beigefügten Zeichnungen dargestellten Ausführungsbeispiels näher erläutert. Es zeigen:
- Fig.1: eine Draufsicht auf ein Kommunikationsendgerät,
- Fig.2: eine schematische Abbildung, die das Abtasten zweier Finger darstellt.

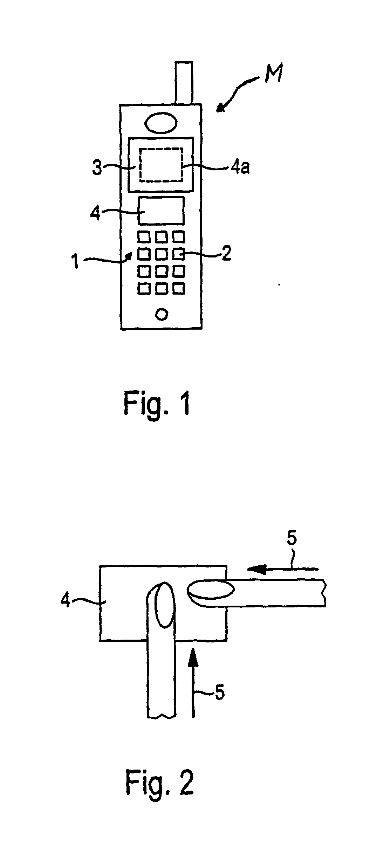

Das in Fig.1 dargestellte Kommunikationsendgerät M umfasst ein Bedienfeld 1, auf dem eine Tastatur 2 ein Display 3 und ein biometrischer Sensor 4 angeordnet sind. Der Sensor 4 hat beispielsweise die Form eines Rechteckes und ist zwischen Display 3 und Tastatur 2 angeordnet. Bei einer alternativen Ausgestaltung ist der Sensor 4a in platzsparender Weise in das Display 3 integriert. Der Sensor 4 ist so ausgestaltet, dass er neben dem Muster der Fingerspitze bzw. dem Fingerabdruck auch die Ausrichtung 5 (Fig.2) und die Lage des Fingers erfasst.

Auf diese Weise, d.h. durch Erfassen eines Fingerabdrucks, um dadurch Steueranweisungen für das Kommunikationsendgerät abzuleiten, wird eine Steuerung des Kommunikationsendgeräts möglich, die unabhängig vom Geräuschpegel der Umgebung ist, und beispielsweise in ruhiger Umgebung, wie Sitzungen, durchgeführt werden kann.

Insbesondere bei Kommunikationsendgeräten in der Form eines Mobiltelefons mit kleinen Abmessungen kann der Sensor 4 oder 4a derart klein bemessen sein, dass gerade ein Fingerabdruck und dessen Ausrichtung erfassbar ist.

Es ist jedoch auch denkbar, bei größer dimensionierten Kommunikationsendgeräten den Sensor 4 oder 4a bzw. dessen Sensorfläche derart auszubilden, dass das Auflegen und Erfassen eines Fingers an unterschiedlichen Positionen möglich ist. Hierdurch wird ein weiterer Freiheitsgrad der Steuerung erreicht.

Zunächst kann zur Autorisierungsprüfung bei in Betriebnahme des Kommunikationsendgeräts M ein Fingerabdruck des Benutzers mittels eines der Sensoren 4 oder 4a erfasst werden. Anstelle oder zusätzlich zu dem eigentlichen Fingerabdruckmuster kann als Autorisierungsmerkmal auch die Ausrichtung und/oder die Position eines Fingers bzw. Fingerabdrucks auf dem Sensor 4 oder 4a erfasst werden.

Ein Fingerabdruck bzw. dessen Erfassung kann neben der Autorisierungsprüfung auch zur Steuerung des Kommunikationsendgeräts verwendet werden. Beispielsweise kann in einem Bereitschaftszustand, in dem das Kommunikationsendgerät auf Steueranweisungen eines Benutzers, wie die Eingabe einer Telefonnummer oder das Aufrufen eines Menüs, wartet, durch Erfassen eines Fingerabdrucks in einer bestimmten Ausrichtung, wie der in Fig.2 gezeigten vertikalen Ausrichtung mit Fingerspitze nach oben, eine Liste der zuletzt angewählten Telefonnummern durchblättert werden. Das bedeutet, dass bei jedem erneuten Drücken des Fingers in der in Fig.2 gezeigten vertikalen Ausrichtung auf den Sensor 4 oder 4a beispielsweise die oben besagte Liste um einen Listeneintrag beginnend bei dem zuletzt angewählten Listeneintrag in einer Endloswiederholung durchblättert wird, wobei beispielsweise durch Drücken des Fingers mit einer horizontalen Ausrichtung, wie sie ebenfalls in Fig.2 gezeigt ist, ein Listeneintrag auswählbar bzw. die entsprechende Telefonnummer anwählbar ist. Es ist auch denkbar, eine Auswahl eines Listeneintrags mittels des Fingerabdrucks eines anderen spezifisch dafür vorgesehenen Fingers durchzuführen, wobei auch dessen Ausrichtung gegenüber dem Sensor 4 oder 4a als Auswahlkriterium dienen kann.

Neben der Möglichkeit, eine Liste bereits angewählter Telefonnummern durchzublättern bzw. durchzusehen, ist es auch möglich, durch die Erfassung eines Fingerabdrucks bzw. dessen Ausrichtung eine Liste von bereits angewählten oder oft benötigten (und deshalb voreingestellten) Funktionen bzw. Applikationen, wie eine Applikation zum Erstellen einer SMS (Short Message Service)-Nachricht oder zum Erweitern eines kommunikationsendgeräteigenen Telefonbuch usw., durchzublättern. Das Durchblättern der Liste von Applikationen kann in entsprechender Weise wie das Durchblättern der Liste von Telefonnummern oder mittels Tasten der Tastatur 2 (d.h. zumindest einer Taste zum Durchblättern der Liste und gegebenenfalls einer Taste zum Auswählen des Listeneintrags) durchgeführt werden. Ferner ist es möglich, mittels der Erfassung eines Fingerabdrucks bzw. dessen Ausrichtung (bei Ausbildung des Kommunikationsendgeräts als ein Telefon) Anrufe entgegen zu nehmen oder abzulehnen. Erhält der Benutzer vom Kommunikationsendgerät eine Rufsignalisierung, so kann er beispielsweise durch Auflegen eines bestimmten Fingers in einer vertikalen Ausrichtung, wie es in Fig. 2 gezeigt, den Anruf entgegen nehmen, oder durch Auflegen eines bestimmten Fingers in einer horizontalen Ausrichtung, wie es ebenso in Fig. 2 gezeigt, den Anruf zurückweisen.

Es ist ferner denkbar, mittels der Erfassung eines Fingerabdrucks bzw. dessen Ausrichtung durch komplexe Menüstrukturen zu navigieren, die insbesondere zuvor mittels eines Fingerabdrucks bzw. dessen Ausrichtung aufgerufen worden sind. So kann ein vertikal nach oben bzw. nach unten ausgerichteter Finger dazu dienen, durch die einzelnen Menüpunkte zu navigieren, während ein nach rechts ausgerichteter Finger zur Anwahl eines Menüpunkts dient und ein nach links ausgerichteter Finger zum Rücksprung in eine höhere Menüebene dient. Entsprechend lassen sich Steuervorgänge für Menüs, sowie Listen und Applikationen auch durch Erfassung von verschiedenen Fingern (entsprechend der durchzuführenden Funktionen) oder durch die Erfassung des Zeitabstands zwischen aufeinanderfolgenden Fingerabtastungen durch den Sensor 4 (4a) eines oder mehrerer Finger durchführen.

Außer zur Steuerung des Kommunikationsendgeräts können die erfassten Fingerabdrücke bzw. deren Ausrichtung, insbesondere von mehreren Fingern, zur Eingabe von Zeichen dienen. Es sei davon ausgegangen, dass ein Benutzer die fünf Finger einer Hand zur Eingabe von Ziffern einer Telefonnummer verwenden möchte. So können beispielsweise die Finger von Daumen bis kleinem Finger bzw. deren Abdruck in vertikaler Ausrichtung, wie es in Fig. 2 gezeigt ist, die Ziffern "1","2","3","4","5" repräsentieren, während dieselben Finger in einer horizontalen Ausrichtung, wie es ebenso in Fig. 2 gezeigt ist, die Ziffern "6","7","8","9","0" repräsentieren. Nach Anwählen einer speziellen Applikation zum Eingeben von Telefonnummern mittels Fingerabdrücken können die einzelnen oben beschriebenen Finger in bestimmter Ausrichtung auf den Sensor gelegt werden, um die Ziffern der Telefonnummer einzugeben. Anschließend kann beispielsweise durch ein Verbleiben des die letzte Ziffer repräsentierenden Fingers auf dem Sensor für eine Zeit größer als ein vorbestimmtes Zeitintervall die Anwahl der Telefonnummer zum Aufbau einer Kommunikationsverbindung gestartet werden. Bei einer genauen der Erfassung des Fingerabdrucks bzw. dessen Ausrichtung ist es auch denkbar, nicht nur eine horizontale oder vertikale Ausrichtung eines Fingers zu erkennen, sondern auch "schräge" Ausrichtungen, die in einem Winkel zwischen "horizontal" und "vertikal" liegen. Somit können einem Fingerabdruck eines Fingers in Kombination mit dessen Ausrichtung eine Vielzahl von Zeichen zugeordnet werden, so dass beispielsweise neben der Eingabe von Ziffern auch die Eingabe von Buchstaben möglich ist. Ferner ist es denkbar, anstelle eine Telefonnummer direkt einzugeben, beispielsweise den oder die einer Kurzwahlziffernkombination entsprechenden Finger nacheinander (mit richtiger Ausrichtung) auf den Sensor zu legen, um die Anwahl der Telefonnummer zum Aufbau einer Kommunikationsverbindung zu bewirken.

Bei Sensoren mit einer ausgedehnteren Sensorfläche ist es auch möglich, zwei oder mehr Fingerabdrücke auf einmal zu erfassen, wobei durch die Kombination von zwei oder mehr bestimmten Fingerabdrücken, die von dem Sensor erfasst werden, ebenso eine Steuerung des Kommunikationsendgerät möglich ist. Wird ferner neben dem eigentlichen Fingerabdruckmuster wieder die Ausrichtung der jeweiligen Fingerkombinationen als zusätzliches Steuerkriterium verwendet, so ergibt sich eine große Anzahl von Steuerbefehlen, die durch Erfassung der Fingerabdrücke realisiert werden können.

Bei Sensoren mit einer ausgedehnteren Sensorfläche ist es ferner möglich, einen oder mehrere Fingerabdrücke an unterschiedlichen Positionen zu erfassen, um somit in Abhängigkeit von der Position der erfassten Fingerabdrücke bestimmte Steuervorgänge auszuführen. Beispielsweise kann in einem Bereitschaftszustand ein in vertikaler Richtung ausgerichteter auf einem rechten Abschnitt der Sensorfläche aufgelegter Finger bewirken, dass eine Applikation geöffnet wird, die eine Liste der zuletzt angewählten Telefonnummern anzeigt, während ein in vertikaler Richtung ausgerichteter auf einem rechten Abschnitt der Sensorfläche aufgelegter Finger bewirken kann, dass eine Applikation geöffnet wird, die eine Liste der zuletzt angewählten Funktionen anzeigt.

Das Kommunikationsgerät kann, wie es in Fig. 1 gezeigt ist, als ein Mobilfunkgerät bzw. Mobiltelefon, insbesondere nach dem GSM (Global System for Mobile Communication)- oder dem UMTS (Universal Mobile Telecommunication Service)-Standard, ausgebildet sein. Es kann jedoch auch als ein (kleiner) tragbarer Computer, wie ein Organizer bzw. ein PDA (PDA: personal digital assistant = persönlicher digitaler Assistent), ausgebildet sein. Ferner ist es möglich, das Kommunikationsendgerät als ein am Arm getragenes Kommunikationsendgerät, wie eine Uhr oder Handgelenkstelefon (Wrist-Phone), auszubilden.

## Patentansprüche

1. Mobiles Kommunikationsendgerät mit einer Bedienfläche (1), auf der ein biometrischer Sensor (4,4a) zur Erkennung eines Fingerabdruckes angeordnet ist, wobei der biometrische Sensor (4,4a) dafür ausgelegt ist, die Ausrichtung eines Fingers zu erfassen und eine von der erfassten Ausrichtung des Fingers abhängige bestimmte Steueranweisung in das mobile Kommunikationsendgerät zu dessen Steuerung einzugeben.

2. Kommunikationsendgerät nach Anspruch 1,
**dadurch gekennzeichnet, dass** der Sensor (4a) in ein Display (3) des Kommunikationsendgeräts integriert ist.

3. Kommunikationsendgerät nach Anspruch 1 oder 2,
**dadurch gekennzeichnet,**
**dass** der Sensor (4, 4a) eine Flächenausdehnung aufweist, die das Auflegen eines Fingers an unterschiedlichen Positionen erlaubt.

4. Kommunikationsendgerät nach Anspruch 3,
**dadurch gekennzeichnet,**
**dass** der Sensor (4, 4a ) die unterschiedliche Positionen erfasst.

5. Kommunikationsendgerät nach einem der Ansprüche 1 bis 4,
**dadurch gekennzeichnet,**
**dass** der Sensor (4,4a) den Zeitabstand zwischen aufeinanderfolgenden Abtastungen eines oder mehrerer Finger erfasst.

6. Kommunikationsendgerät nach einem der Ansprüche 1 bis 5,
**dadurch gekennzeichnet,**
**dass** der Sensor (4, 4a) als Eingabeeinrichtung zur Bedienung des Geräts dient.

7. Kommunikationsendgerät nach einem der Ansprüche 1 bis 6,
**dadurch gekennzeichnet,**
**dass** die durch den Sensor (4, 4ä) eingegebenen Steueranweisung zur Steuerung einer auf der Bedienfläche dargestellten Menüstruktur oder zur Eingabe von Zeichen dient.

8. Kommunikationsendgerät nach einem der Ansprüche 1 bis 7,
**dadurch gekennzeichnet,**
**dass** der Sensor (4,4a) zur Erkennung einer Mehrzahl von Fingerabdrücken und deren Ausrichtung angeordnet ist.

## Claims

1. A mobile communication terminal having an operator interface(1) on which a biometric sensor (4, 4a) is arranged for recognizing a fingerprint, the biometric sensor (4, 4a) being designed for recording the orientation of a finger and for inputting into the mobile communication terminal a defined control instruction, depending on the recorded orientation of the finger, for the purpose of controlling the mobile communication terminal.

2. A communication terminal according to Claim 1,
**characterized in that**
the sensor (4a) is integrated into a display (3) of the communication terminal.

3. A communication terminal according to Claim 1 or 2,
**characterized in that**
the sensor (4, 4a) has a panel extension which allows a finger to be placed upon it in different positions.

4. A communication terminal according to Claim 3,
**characterized in that**
the sensor (4, 4a) records the different positions.

5. A communication terminal according to any one of Claims 1 to 4,
**characterized in that**
the sensor (4, 4a) records the time interval between successive scans of one or more fingers.

6. A communication terminal according to any one of Claims 1 to 5,
**characterized in that**
the sensor (4, 4a) serves as an input device for operating the device.

7. A communication terminal according to any one of Claims 1 to 6,
**characterized in that**
the control instruction input through the sensor (4, 4a) serves to control a menu structure shown on the operator interface or to input characters.

8. A communication terminal according to any one of Claims 1 to 7,
**characterized in that**
the sensor (4, 4a) is arranged for recognizing a plurality of fingerprints and their orientation.

## Revendications

1. Terminal de communication mobile muni d'une surface de commande (1) sur laquelle est disposé un capteur biométrique (4, 4a) pour la reconnaissance d'une empreinte digitale, le capteur biométrique (4, 4a) étant conçu pour détecter l'orientation d'un doigt et pour entrer dans le terminal de communication mobile une instruction de commande précise dépendante de l'orientation détecté du doigt pour sa commande.

2. Terminal de communication selon la revendication 1, **caractérisé en ce que** le capteur (4a) est intégré dans un afficheur (3) du terminal de communication.

3. Terminal de communication selon la revendication 1 ou 2, **caractérisé en ce que** le capteur (4, 4a) présente une superficie qui permet de poser un doigt à différentes positions.

4. Terminal de communication selon la revendication 3, **caractérisé en ce que** le capteur (4, 4a) détecte les différentes positions.

5. Terminal de communication selon l'une des revendications 1 à 4, **caractérisé en ce que** le capteur (4, 4a) détecte l'intervalle de temps écoulé entre les balayages successifs d'un ou de plusieurs doigts.

6. Terminal de communication selon l'une des revendications 1 à 5, **caractérisé en ce que** le capteur (4, 4a) sert de dispositif d'entrée pour la commande du terminal.

7. Terminal de communication selon l'une des revendications 1 à 6, **caractérisé en ce que** l'instruction de commande entrée par le capteur (4, 4a) sert à la commande d'une structure de menu représentée sur la surface de commande ou à saisir des caractères.

8. Terminal de communication selon l'une des revendications 1 à 7, **caractérisé en ce que** le capteur (4, 4a) est disposé pour la reconnaissance d'une pluralité d'empreintes digitales et de leur orientation.
